# EUROPEAN PATENT SPECIFICATION

(11) **EP 2 213 608 B1**
(45) Date of publication and mention of the grant of the patent: **19.12.2012**
(21) Application number: 10152391.8
(22) Date of filing: 02.02.2010
(51) Int. Cl.: B66C 23/62, B60K 11/08, E02F 9/08, E02F 9/00

(54) **Working vehicle**
Nutzfahrzeug
Véhicule de travail

(30) Priority: 03.02.2009 JP 2009022820
(43) Date of publication of application: 04.08.2010
(73) Proprietor: Kobelco Cranes Co., Ltd., Tokyo 141-8626 (JP)
(72) Inventor: Mitsuda, Masahiko, Kobe-shi Hyogo 651-2271 (JP); Kimura, Yasumasa, Kobe-shi Hyogo 651-2271 (JP); Kinoshita, Shinichi, Kobe-shi Hyogo 651-2271 (JP); Hanamoto, Takahiro, Akashi-shi Hyogo 674-0063 (JP)
(74) Representative: TBK

(56) References cited:
- EP-A2- 1 775 392
- JP-A- 2008 155 790

## Description

### BACKGROUND OF THE INVENTION

### 1. Field of the Invention

The present invention relates to such a working vehicle as crane, power shovel, and so on. Especially, this invention relates to the working vehicle which secures a sufficient volume of cooling air for cooling an engine of the working vehicle while it is driving.

### 2. Description of Related Art

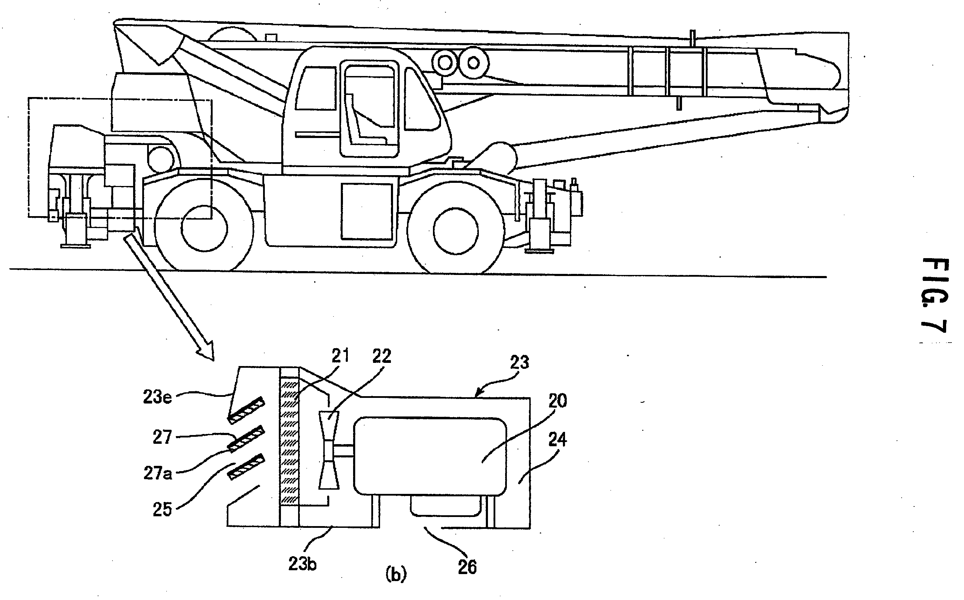

First, a working vehicle relating to the conventional example is explained referring to Fig. 7. Fig. 7 shows a rough-terrain crane relating to the conventional example. The left figure is a side-view and the right figure is a partial enlarged perspective view showing the area surrounded with dotted lines in the left figure.

In such a working vehicle as a rough-terrain crane or the like as shown in Fig. 7, such an engine 20 as diesel engine and the like is used as a power source for working device. As shown in Fig. 7, the engine 20 is located at a rear of an upper revolving body. This engine 20 is enclosed by a housing 23 that forms an engine room 24. An air intake port 25 is provided on a rear end panel 23e which forms this engine room 24. An air outlet port 26 is provided on a bottom plate 23b.

Next, by rotating a fan 22 which is directly coupled to the above engine 20, cooling air is taken into through the above air intake port 25. After engine cooling water is cooled down through a cooler (radiator) 21, the cooling air is exhausted from an air outlet port 26. In order to reduce noises emitted especially from the air intake port 25 and caused by the engine 20 and the fan 22 at an opening of the above engine room 24, the above air intake port 25 is formed as a louver. Further, this louver 27 is lined with sound absorbing materials 27a.

Thus, in case the air intake port 25 is located at the rear end of the working vehicle, as the intake volume of the cooling air does not make a big difference between in the case the working vehicle is working in an immovable condition and in the case it is driving at a low speed (20 km/h for example), it does not cause any problem on cooling the engine 20. However, when the working vehicle is driving at a high speed of 80 km/h, for example, the wind flow caused by driving at the air intake port 25 falls within an area where separation layer of wind flow is occurred, and consequently it causes a problem that a sufficient volume of wind flow can not be procured.

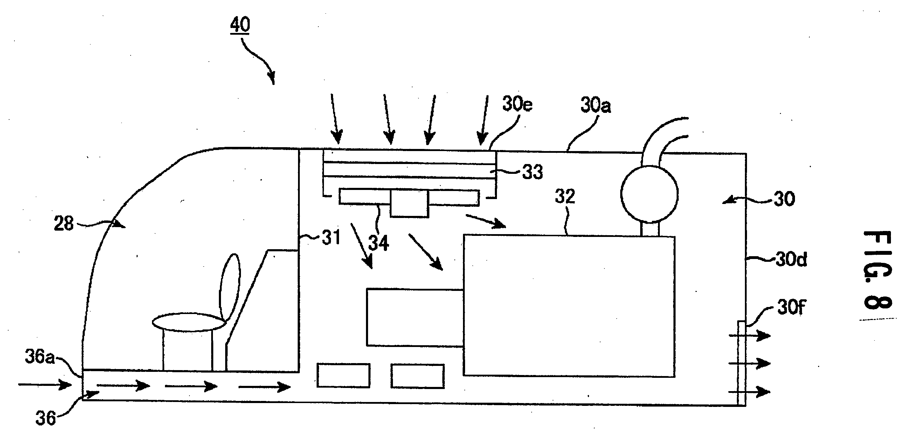

As a working vehicle which solves this problem, the vehicle described in Japanese Patent Laid Open No. 2008-155790 is known. The conventional working vehicle described in the document is explained referring to Fig. 8. Fig. 8 shows an internal construction of an operator cab and an engine room installed on an upper revolving body of the conventional crane.

An operator cab 28 and an engine room 30 of the conventional crane are installed in a housing 40. This housing 40 is installed on the right half area of the upper revolving body as viewed from the front. As shown in Fig. 8, the space of the housing 40 is separated into the front and the rear by a partition panel 31, so that it may compose the operator cab 28 at the front and the engine room 30 at the rear respectively. On a top plate 30a of the engine room 30, an air intake 30e is provided so that outside air may be taken into in order to cool a radiator 33. Underneath a rear end panel 30d of the engine room 30, an exhaust outlet 30f is provided to discharge the hot air of the engine room 30 to the outside.

Moreover, in order to utilize the air blown to the front of the vehicle as a cooling air, an intake guide passage 36 is provided in the housing 40 in order to guide the air as far as to the engine room 30. The above intake guide passage 36 has inlet port 36A for wind flow in front of the housing 40, and the intake guide passage 36 is connected to the engine room 30 by-passing the operator cab 28. Furthermore, in addition to cooling the engine 32 by means of the radiator 33 and the cooling air delivered down from the cooling fan 34, the inside of the engine room 34 is also cooled by the wind flow which is taken into through the intake guide passage 36.

However, the volume of the wind flow taken into from the front is not sufficient while the above crane is driving. Moreover, as the air intake port 30e provided on the top plate has an opening that is in parallel with the driving direction, a large volume of the wind flow can not be expected to be taken into, and a sufficient mass of the cooling air that is necessary to cool the engine 32 can not be ensured. Then again, it is not preferable to install an air intake port on lateral side panels of the upper revolving body from the view point of environmental noises to passersby.

### SUMMARY OF THE INVENTION

It is an object of the present invention to provide a working vehicle which a sufficient volume of cooling air for cooling the engine can be taken into by furnished with air intake ports that enable the wind flow blown to the front to be taken into, in a crane whose operator cab is located in front of an engine room.

Moreover, it is another object of the present invention to provide a working vehicle which can reduce environmental noises to passersby.

The working vehicle of the present invention has a lower traveling body and an upper revolving body that is rotatably mounted on the lower traveling body. On a front area of the upper revolving body, an operator cab is located. In a rear area of the operator cab, an engine room which houses an engine is located. On a front end panel which composes the engine room, a front air intake port that takes the wind flow into the engine room is located. A first curved surface is formed between the rear end of the top plate and the rear side panel that composes the operator cab, and the first curved surface guides the wind flow to the front air intake port.

The working vehicle of the present invention guides the wind flow along the first curved surface between the rear end of the top plate and the rear side panel of the operator cab, and changes its direction of flow, and raises air pressure at an entrance of an air intake port. Accordingly, it is possible to secure a sufficient volume of wind flow while it is driving at a high speed.

The preferable embodiment of the present invention is explained hereinafter. In this embodiment, the engine room is located on one side of the upper revolving body in the width direction. Among those lateral side panels that compose the engine room, an air intake port that guides the wind flow into the engine room is provided on the lateral side panel located on the center side of the upper revolving body. On the above lateral side panel at the lateral air intake port, the second curved surface that guides the wind flow is formed.

In the working vehicle of the preferable embodiment, the wind flow changes its flow direction, guided along the second curved surface, and then the air pressure at the entrance of the air intake port on the lateral side panel is raised. Accordingly, it is possible to secure the sufficient volume of the wind flow while the working vehicle is driving at a high speed.

Another preferable embodiment of the present invention is explained. In this embodiment, the third curved surface, guiding the wind flow to the above air intake port, is formed between the rear end of the lateral side panel and the above rear end panel that compose the operator cab.

In the working vehicle of this preferable embodiment, the wind flow changes its flow direction guided along the third curved surface, and then the air pressure at the entrance of the air intake port is raised. Accordingly, the volume of the wind flow can be more securely procured than the above embodiment when the working vehicle is driving at a high speed.

### BRIEF DESCRIOTION OF THE DRAWING

Fig. 1 is a plane view showing a schematic layout of an upper revolving body of a rough-terrain crane relating to the first embodiment of the present invention;
Fig. 2 relates to the first embodiment of the present invention and is a cross section view of Fig. 1 at the line A-A;
Fig. 3 relates to a plane view showing a schematic layout of an upper revolving body of a rough-terrain crane of the second embodiment of the present invention;
Fig. 4 relates to the second embodiment of the present invention and is a cross section view of Fig. 3 at the line B-B;
Fig. 5 is a drawing showing effects caused by each first curved surface and second curved surface at their respective air intake ports by evaluating a relative ratio to a volume of intake wind;
Fig. 6 is a drawing showing effects with and without air outlet just under the engine by evaluating a relative ratio to a volume of exhaust air;
Fig. 7 relates to the conventional example, the left figure is a side view, the right figure is a partial enlarged perspective view showing the area surrounded with double dotted lines in left figure; and
Fig. 8 relates to the conventional example and is a schematic view showing an internal construction of an operator cab and an engine room provided on an upper revolving body of a crane.

### DETAILED DESCRIPTION OF THE PREFERRED EMBODIMENTS

### (First Embodiment)

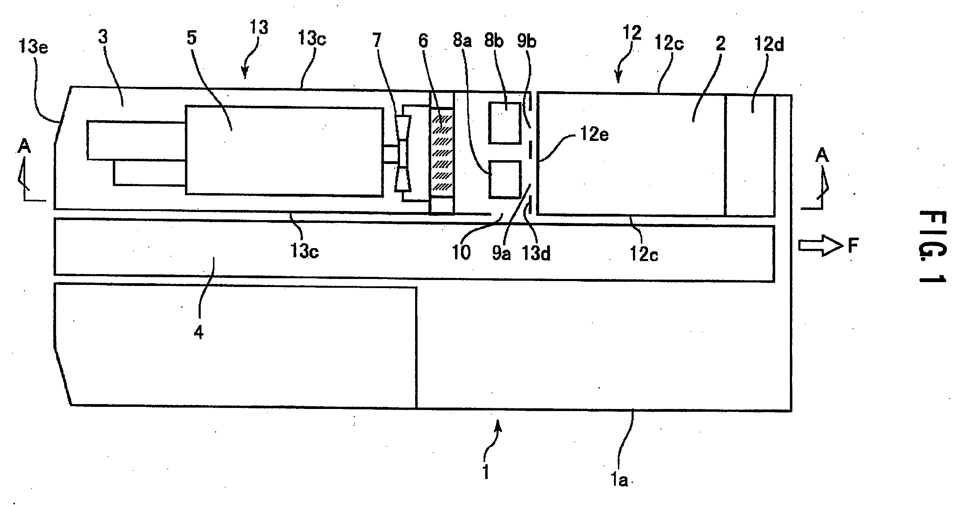

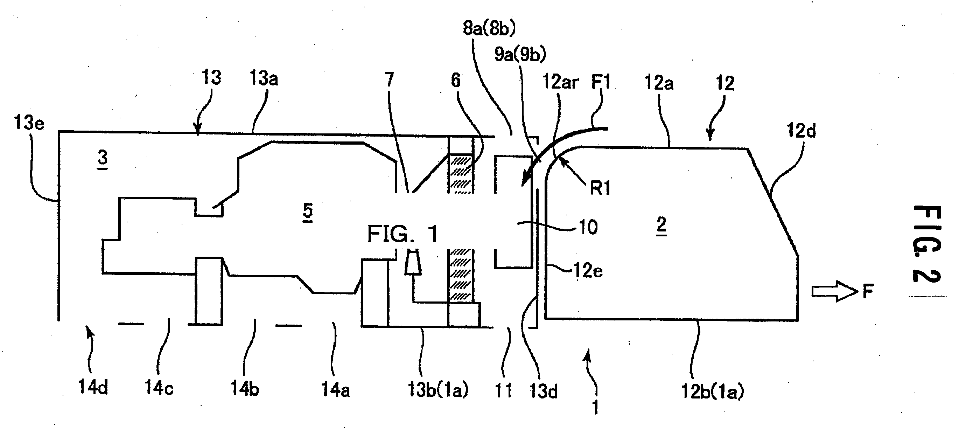

First, the working vehicle relating to the first embodiment of the present invention is explained hereinafter referring to Fig. 1 and Fig. 2. Fig.1 is a plane view showing a schematic layout of an upper revolving body of a rough-terrain crane relating to the first embodiment of the present invention, and Fig. 2 is a cross section view of Fig. 1 at the line A-A.

A revolving frame 1a of the upper revolving body of the rough-terrain crane (hereinafter merely referred to as crane) of the present invention is rotatably mounted on a lower traveling body, not shown, provided with the function of self-driving. Then, on this upper revolving body 1, a working unit 4, an operator cab 2 and an engine room 3 are provided.

The above working unit 4 is a crane unit which works as a hoist. This working unit 4 is furnished with a telescopic boom assembly consisting of a plurality of steps of boom units and mounted on the center, in the lateral direction, of the upper revolving body 1. A base boom of the telescopic boom assembly, at the rear end portion of the base boom, is swingably mounted on a pedestal of the upper revolving body 1, so that the boom may be raised and lowered around the rear end portion.

On the other hand, the above operator cab 2 and the above engine room 3 are installed in independent housings 12 and 13 respectively. These housings 12 and 13 are installed on the left hand side viewed from a driving direction F of the lower traveling body, not shown. The above operator cab 2 is located on the front area of the upper revolving body 1 and the above engine room 3 is located in the rear of the operator cab 2.

The above operator cab 2 contains a space enclosed by a housing 12 consisting of a top plate 12a, a bottom plate 12b, both lateral side panels 12c, a front end panel 12d and a rear end panel 12e. An operator gets in the above operator cab and manipulates the various control devices of the working unit 4 of the crane, like driving or hoisting. On the above bottom plate 12b that composes a floor space of the operator cab 2, various kinds of control devices used for carne operation and an operator seat (not shown) are installed.

On the other hand, the above engine room 3 is a space enclosed by a housing 13 consisting of a top plate 13a, a bottom plate 13b, both lateral side panels 13c, a front end panel 13d and a rear end panel 13e, and the engine room 3 is located in the rear of the operator cab 2. Inside the engine room 2, an engine 5 such as a diesel engine, a radiator 6 and a cooling fan 7 are housed. In the engine room 2, upper air intake ports 8a and 8b that take the air blown from the front (wind flow) into as cooling air for cooling the above radiator 6 are located on the top plate 13a in front of the radiator 6. Moreover, front air intake ports 9a and 9b are located on a front end panel 13d, and a side air intake port 10 is located on the lateral side panel 13c at the center side of the body (on the left side viewed from the driving direction F), and a lower intake port 11 is located on a bottom plate 13b.

On the bottom plate 13b of the engine room 3, air outlets 14a - 14d are provided in order to exhaust hot air from the engine room 3.

Moreover, on the working vehicle relating to the first embodiment of the present invention, the first curved surface 12ar having a curved surface with curved radius R1 is formed at the rear end of the top plate 12 that composes the above operator cab. The top plate 12a of the operator cab 2 is connected smoothly to the rear end panel 12e by the first curved surface 12ar. The first curved surface 12ar is formed to follow the flow of the wind that is taken in from the front air intake ports 9a and 9b. As for the above curved radius R1, it is preferable to be larger than 300mm for instance, so that it may not cause the wind flow to form a separation layer.

In the engine room 3, in addition to the engine 5 and the radiator 6 with the radiator fan 7, a hydraulic pump, hydraulic valves, a muffler, an electrical box and so forth (not shown) are contained. The above engine 5 and the hydraulic pump are arranged adjacent with each other in the engine room 3. A hydraulic pump is driven by the above engine 5.

This hydraulic pump charges hydraulic fluid to or discharges it from the hydraulic equipments provided on the upper revolving body 1, so that it may actuate telescopic cylinders and raising/lower cylinders of the above telescopic boom for example. In addition, the hydraulic fluid is charged to or discharged from such hydraulic equipment as various hydraulic motors provided on the lower traveling body. While the above engine 5 and hydraulic pumps are in operation, the room temperature in the engine room 3 becomes high by the heat generated by the engine and the hydraulic pumps.

The above hydraulic valves, not shown, are composed of selecting valves that control the hydraulic system, so that the hydraulic fluid may be charged to or discharged from the above hydraulic equipments. Supply lines from the hydraulic pump are connected to the above hydraulic equipments through the hydraulic valves.

The above muffler, not shown, is connected to the upper side of the engine 5. The other end of the muffler installed on the engine 5 protrudes outside through the top plate 13a of the engine room 3. Through this muffler, the engine exhaust gas is exhausted to the outside of the engine room 3.

The above radiator 6 and the above cooling fan 7 are provided mainly to cool the engine 5. The radiator 6 is cooled by the wind flow that is taken through the upper air intake ports 8a and 8b provided on the top plate 13a of the engine room 3, the front air intake ports 9a and 9b provided on the front end panel 13d, the lateral air intake port 10 provided on the front end panel 13c and the lower air intake port 11 provided on the bottom plate 13b respectively, by driving the cooling fan 7. The engine 5 is cooled by the radiator 6.

In the first embodiment of the present invention, the above air intake ports 8a, 8b, 9a, 9b, 10 and 11 that take the wind flow into are provided on the housing 13 that composes the above engine room 3. Furthermore, the first curved surface 12ar is formed so as to follow the flow of the wind that is taken into from the upper air intake ports 8a and 8b, and the top plate 12a is connected to the rear end panel 12e of the operator cab 2 smoothly. By means of these configurations, in a working vehicle whose operator cab 2 is located in front of the engine room 3, as the wind flow F1 changes its flowing direction by following the curved surface 12ar at the rear corner of the ceiling of the operator cab 2, its air pressure at the entrance of the front air intake ports 9a and 9b can be raised so in order to procure the sufficient volume of the cooling air while the working vehicle is driving at a high speed.

Hereinafter, referring to Fig. 1 and Fig. 2, the process for cooling the interior of the engine room 3 is explained.

In addition to driving the cooling fan 7, while the crane is driving, the wind flow blown from the front is taken into the engine room 3 through the above front air intake ports 8a, 8b, 9a, 9b, 10 and 11, and the wind is applied to the radiator 6. In the above radiator 6, there is the cooling water that is sent to the radiator 6 after it is heated in the engine 5. This heated cooling water is heat-exchanged by the above cooling air so that the cooling water is cooled down. The cooling water that is cooled in the radiator 6 is re-circulated to the engine 5 so as to cool the engine 5 down.

The above cooling air is sent below the engine room 3 by operating the cooling fan 7 after it is heat-exchanged in the radiator 6. This air flow is blown directly against the engine 5, the hydraulic pump and the electrical box which are not shown in the drawing. Accordingly, the engine 5 is further cooled. The hydraulic pump and the electrical box are also cooled. The air which flows below the cooling fan 7 is heated in the engine room 3, and it has become hot air. This hot air is exhausted to the outside through the air outlet ports 14a - 14d that are provided on the floor plate 13b.

In the first embodiment of the present invention, in addition to cooling each kind of equipment by the wind flow taken in from the air intake ports 8a, 8b, 10 and 11 provided on the housing 13 which compose the engine room 3, the driven wind F1 taken in from the above front air intake ports 9a and 9b changes its flow direction along the first curved surface 12ar formed at the rear corner of the ceiling of the operator cab 2 so that the air pressure of the driving wind F1 just at the front of the front intake ports 9a and 9b is increased. Accordingly, it is possible for the working vehicles whose operator cab 2 is located in front of the engine room 3 to increase the cooling efficiency in the engine room 3.

### (Second Embodiment)

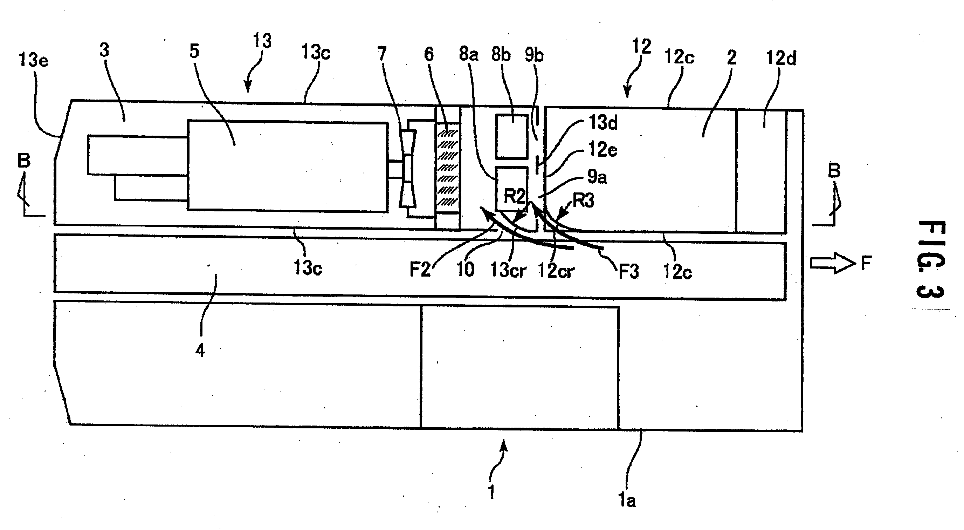

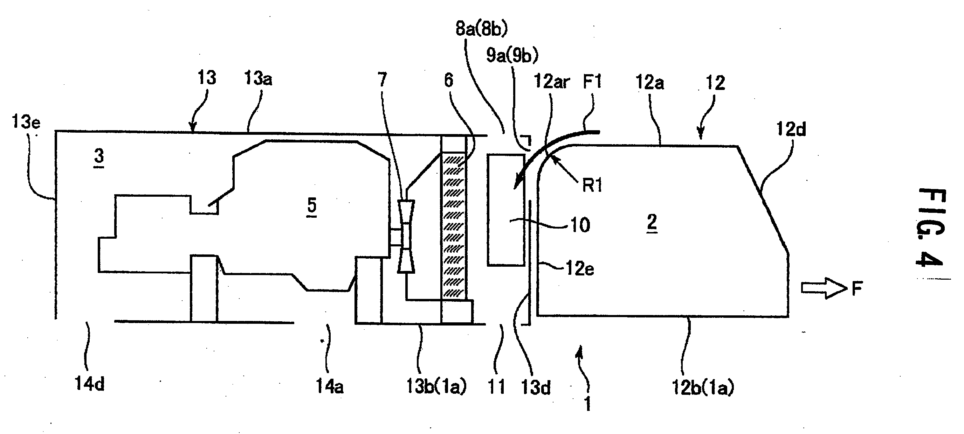

Secondly, a layout of air-conditioning equipment relating to the second embodiment of the present invention is explained, referring to Fig. 3 and Fig. 4. Fig. 3 is a plane view showing the schematic layout of an upper revolving body of a rough-terrain crane relating to the second embodiment of the present invention, and Fig. 4 is a cross section view of Fig.3 at the line B-B.

However, the points that the second embodiment differs from the above first embodiment exist only in the lateral side panel arrangement of the operator cab, in the arrangement of the lateral air intake ports on the lateral panel and in the exhaust port on the bottom plate of the engine room, and all arrangements other than these are identical to the above first embodiment of the present invention. Accordingly, the items that equal those of the first embodiment are named the same reference numbers, and only about the differences between the first and second embodiments are explained hereinafter.

In the first embodiment 1, the lateral panel 12c which composes the operator cab 2 is formed by a flat plate. In the engine room 3, the lateral air intake port 10 provided on the side panel 13 is merely an opening and the exhaust ports 14b and 14c are also provided on the bottom plate 13b right under the engine 5.

On the contrary, in the second embodiment of the present invention, the lateral air intake port 10 provided on the lateral panel 13c of the engine room 3 forms the second curved surface 13cr having a curved surface with a curved radius R2, and the lateral panel 13c is bent inward to the engine room 3. This lateral air intake port 10 is formed as an opening on the lateral panel 13c. The second curved surface 13cr follows the flow direction of the wind flow F2 that is taken in from the above lateral air intake port 10. On the other hand, the rear end of the lateral panel 12c of the operator cab 2 at the side of the body centerline (on the left viewed from the driving direction F) is connected, with the third curved surface 12cr, smoothly to the rear end panel 12e that composes the above operator cab 2. The third curved surface 12cr has a curved surface with a curved radius R3 that follows the flow direction of the wind flow taken in from the front air intake port 9a formed on the front end panel 13d of the engine room 3.

In this second embodiment of the present invention, the wind flow F2 changes its flow direction guided by the second curved surface 13cr formed on the above lateral panel 13c and then raises its air pressure at the entrance of the lateral air intake port 10. In addition to cooling by the wind flow from the air intake ports 8a, 8b, 9b and 11 provided on the above housing 13 composing the engine room 3, the wind flow F3 that is taken in from the above front air intake ports 9a changes its flow direction to follow the third curved surface 12cr formed at the rear corner of the lateral side panel 12c of the above operator cab 2 so that it increases the air pressure of the wind flow F3 just at the front of the front intake port 9a. Because of this, it is possible for the working vehicle whose operator cab 2 is located in front of the engine room 3 to increase the cooling efficiency in the engine room 3 as well.

Moreover, the side panel 13c at the lateral side of the body (on the right viewed from the driving direction F), composing the above operator cab 3, does not have any air intake ports for taking the wind flow in. Furthermore, on the floor plate 13b which composes the above engine room 3, the air outlet ports 14a and 14d that exhaust the wind flow are provided, but no outlet port is provided right under the engine 4. As a result, the second embodiment of the present invention does not emit noises of engines and fans directly to passersby and enable to reduce environmental noises for passersby.

### (Example of Analysis 1)

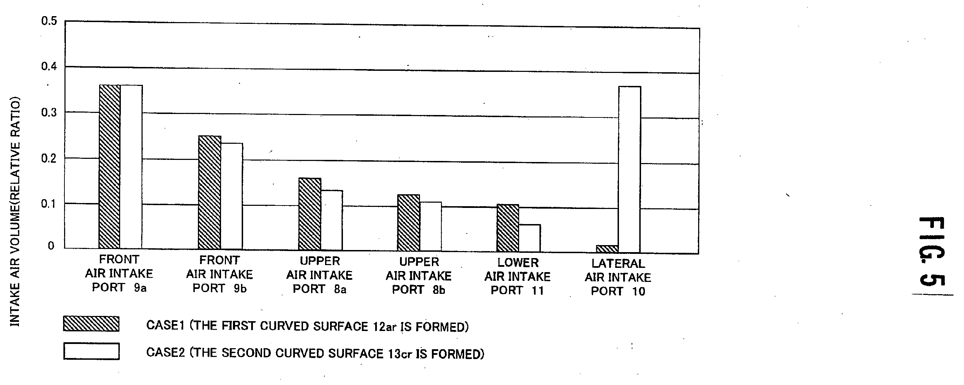

An implementation example of simulated analysis of the volume of wind flow that is taken into the engine room of the working vehicle of the present invention, using the commercial computational fluid dynamics code, "ANSYS FLUENT version 6.2", is explained referring to Fig 5 herein under. Fig. 5 shows the effects of the air intake ports of the first and second curved surfaces against the volume of intake wind as a relative ratio. Fig. 5 shows the analyzed result of intake air volume from the air intake ports as a relative ratio in each case 1 and 2. In the case 1, the first curved surface 12ar is formed at the rear end of the top plate of the operator cab 2. In the case 2, the second curved surface 13cr is formed at lateral air intake port 10 of the engine room 3.

In the case 1 where the first curved surface 12ar is formed at the rear end of the top plate of the operator cab 2, the volume of intake wind from the front air intake ports 9a and 9b is relatively larger and the first curved surface 12ar is recognized to be effective. However, being accompanied by the above intake air, the volume of intake air at the upper air intake port and the lower air intake port are also increased. On the contrary, in the case 2 where the second curved surface is formed in the lateral air intake port, the volume of air intake is overwhelmingly large, and the effectiveness of forming the second curved surface 13cr in the lateral air intake port 10 is recognized.

### (Example of Analysis 2)

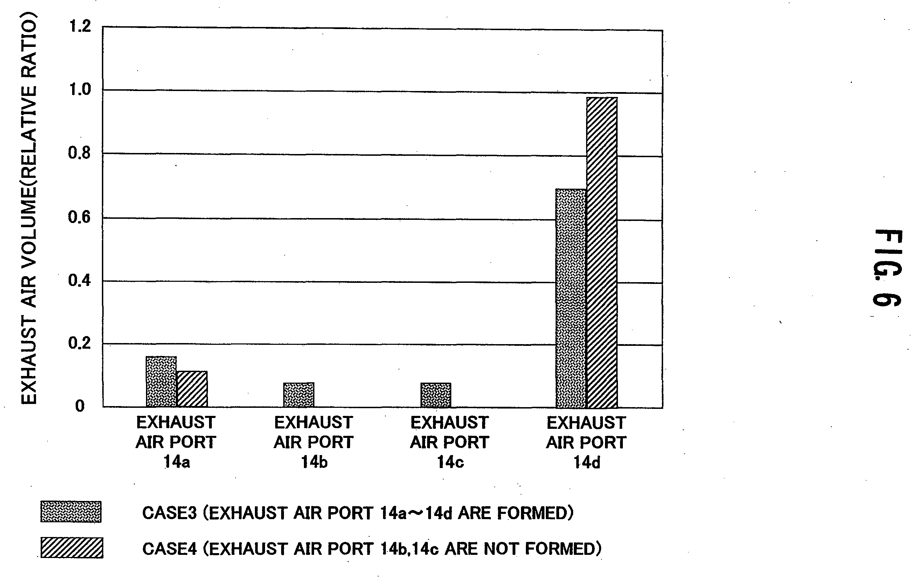

Then, using the commercial computational fluid dynamics code, "ANSYS FLUENT version 6.2", similarly in the example of analysis 1, the implementation example of simulated analysis of the exhaust air volume of the wind flow that is exhausted from the engine room of the working vehicle of the present invention is explained referring to Fig. 6. Fig. 6 shows the effectiveness of the air outlets 14b and 14c provided just under the engine as a relative ratio on the volume of the air outlet. Fig. 6 shows the result of analysis of the exhaust air volume from each outlet port on the respective two cases as a relative ratio. In the case 1, the air outlet ports 14a - 14d are provided, including the air outlet ports 14b and 14c, on the bottom plate 13b of the engine room 3 just under the engine. In the case 2, only the air outlet port 14a and 14d are provided on the bottom plate 13b, not including the air outlet ports 14b and 14c just under the engine 5.

According to the analyzed results, because the exhaust air volume from the exhaust ports 14b and 14c provided just under the engine 5 is originally very small, even though these exhaust ports 14b and 14c are removed, the exhaust air volume from the exhaust port 14d increases only to the extent of removing the ports 14b and 14c. Accordingly, the emission of noise caused by the engine can decrease without changing the total volume of the exhaust air.

As explained above, in the working vehicle of the present invention, the front air intake port is provided on the front end panel that composes the engine room in order to take in the wind flow. The rear end of the top plate that composes the operator cab forms a curved surface which follows a flow direction of the wind flow taken in from the air intake port provided on the above front panel. Moreover, the top plate is smoothly connected to the rear end panel that composes the operator cab. Because of these reasons, in the working vehicles whose operator cab is located in front of the engine room, the wind flow changes its flow direction along the curved surface on the rear end of the top plate of the operator cab so that the air pressure of the driving wind at the entrance of the front air intake port is raised. Accordingly, it is possible to secure sufficient volume of the wind flow.

Furthermore, in the second embodiment, in order to take the wind flow into the engine room effectively, the first curved surface is formed on the top plate of the operator cab, the second curved surface is formed on the lateral panel of the engine room and the third curved surface is formed on the lateral panel of the operator cab. However, these three curved surfaces are not necessarily provided simultaneously. In addition to the first curved surface, either the second or the third curved surface may be formed near the first curved surface.

A working vehicle of the present invention is provided with a lower traveling body having a self driving mechanism and an upper revolving body 1 rotatably mounted on the lower traveling body. In front of the upper revolving body 1, an operator cab 2 is provided. In a rear of the operator cab 2, an engine room 3 which houses an engine 5 is provided. On the front end panel 13d that composes the engine room 3, front air intake ports 9a and 9b are provided so as to guide a wind flow into the engine room 3. At a position between a rear end of a top plate 12a and a rear end panel 12e, composing operator cab 2, the first curved surface 12ar with a curved radius R1 is formed so as to guide the wind flow to the front air intake ports 9a and 9b. The working vehicle of the present invention is able to take in the wind flow blown from the front sufficiently, and also is able to reduce noises for passersby.

## Claims

1. A working vehicle, comprising:
a lower traveling body,
an upper revolving body (1) rotatably mounted on said lower traveling body,
an operator cab (2) installed on a front of said upper revolving body (1), and
an engine room (3) which houses an engine (5) located in a rear of said operator cab (2),
**characterized in that**
a front air take port (9a,9b) for taking in a wind flow is provided on a front end plate (13d) which composes said engine room (3), and
a first curved surface (12ar) is formed at a position between a rear end of a top plate (12a) and a rear end panel (12e) composing said operator cab, whereby the wind flow is guided to said front air take ports (9a,9b).

2. The working vehicle according to claim 1, wherein
said engine room (3) is located on one side of said upper revolving body (1),
a lateral air intake port (10) is provided on a lateral side panel (13c) of said engine room (3) so that the wind flow can be taken into said engine room (3), and
a second curved surface (13cr) is formed on said lateral side panel at said lateral air intake port (10) so as to guide the wind flow into said engine room (3).

3. The working vehicle according to claim 1 or claim 2, wherein
a third curved surface (12cr) is formed at a position between a rear edge of a lateral panel (12c) and said rear end panel (12e) so as to guide the wind flow to said front air take port (9a).

## Patentansprüche

1. Arbeitsfahrzeug mit:
einem unteren Fahrkörper,
einem oberen sich drehenden Körper (1), der drehbar an dem unteren Fahrkörper montiert ist,
einer Bedienerkabine (2), die an einem vorderen Bereich des oberen sich drehenden Körpers (1) installiert ist, und
einem Maschinenraum (3), der eine Maschine (5) aufnimmt, die in einem rückwärtigen Bereich der Bedienerkabine (2) angeordnet ist,
**dadurch gekennzeichnet, dass**
eine vordere Luftansaugöffnung (9a, 9b) zum Ansaugen einer Windströmung an einer vorderen Endplatte (13d) bereitgestellt ist, die den Maschinenraum (3) bestimmt, und
eine erste gekrümmte Oberfläche (12ar) an einer Position zwischen einem rückwärtigen Ende einer obersten Platte (12a) und einem rückwärtigen Endpanel (12e) ausgebildet ist, die die Bedienerkabine bestimmen, wobei die Windströmung zu den vorderen Luftansaugöffnungen (9a, 9b) geführt wird.

2. Arbeitsfahrzeug nach Anspruch 1, wobei
der Maschinenraum (3) an einer Seite des oberen sich drehenden Körpers (1) angeordnet ist,
eine seitliche Luftansaugöffnung (10) an einem seitlichen Seitenpanel (13c) des Maschinenraums (3) bereitgestellt ist, so dass die Windströmung in den Maschinenraum (3) angesaugt werden kann, und
eine zweite gekrümmte Oberfläche (13cr) an dem seitlichen Seitenpanel an der seitlichen Luftansaugöffnung (10) ausgebildet ist, um die Windströmung in den Maschinenraum (3) zu führen.

3. Arbeitsmaschine nach Anspruch 1 oder 2, wobei
eine dritte gekrümmte Oberfläche (12cr) an einer Position zwischen einer Hinterkante eines seitlichen Panels (12c) und des rückwärtigen Endpanels (12e) ausgebildet ist, um die Windströmung zu der vorderen Luftansaugöffnung (9a) zu führen.

## Revendications

1. Véhicule de travail, comprenant :
un corps mobile inférieur,
un corps rotatif supérieur (1) monté en rotation sur ledit corps mobile inférieur,
une cabine d'opérateur (2) installée sur une face avant dudit corps rotatif supérieur (1), et
une chambre de moteur (3) qui abrite un moteur (5) situé à l'arrière de ladite cabine d'opérateur (2),
**caractérisé en ce que**
un orifice d'admission d'air avant (9a, 9b) pour introduire un courant d'air est prévu sur une plaque d'extrémité avant (13d) qui compose ladite chambre de moteur (3), et
une première surface incurvée (12aR) est formée au niveau d'une position entre une extrémité arrière d'une plaque supérieure (12a) et un panneau d'extrémité arrière (12e) composant ladite cabine d'opérateur, de sorte que le courant d'air soit guidé vers lesdits orifices d'admission d'air (9a, 9b).

2. Véhicule de travail selon la revendication 1, dans lequel
ladite chambre de moteur (3) est située sur un côté dudit corps rotatif supérieur (1),
un orifice d'admission d'air latéral (10) est prévu sur un panneau latéral (13c) de ladite chambre de moteur (3) de sorte que le courant d'air puisse être introduit dans ladite chambre de moteur (3), et
une deuxième surface incurvée (13cr) est formée sur ledit panneau latéral au niveau dudit orifice d'admission d'air latéral (10) de manière à guider le courant d'air dans ladite chambre de moteur (3).

3. Véhicule de travail selon la revendication 1 ou la revendication 2, dans lequel
une troisième surface incurvée (12cr) est formée au niveau d'une position entre un bord arrière d'un panneau latéral (12c) et ledit panneau d'extrémité arrière (12e) de manière à guider le courant d'air vers ledit orifice d'admission d'air avant (9a).
